(19) Europäisches Patentamt
European Patent Office
Office européen des brevets

(11) **EP 2 278 676 A1**

(12) **EUROPEAN PATENT APPLICATION**

(43) Date of publication:
**26.01.2011 Bulletin 2011/04**

(51) Int Cl.:
**H02H 3/08** *(2006.01)*  **H02H 7/26** *(2006.01)*

(21) Application number: **09166352.6**

(22) Date of filing: **24.07.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **ABB Technology AG**
**8050 Zürich (CH)**

(72) Inventors:
• **Deck, Bernhard**
  **79809 Weilheim (DE)**
• **Ukil, Abhisek**
  **5400 Baden (CH)**

(74) Representative: **ABB Patent Attorneys**
**C/o ABB Schweiz AG**
**Intellectual Property (CH-LC/IP)**
**Brown Boveri Strasse 6**
**5400 Baden (CH)**

(54) **Fault direction indicator device and related methods**

(57) A fault direction indicator device (30) for indicating a direction of a fault on a transmission line (10) of a power distribution system (1) is proposed. The fault direction indicator device (30) comprises an input section adapted to receive transmission line data, the transmission line data including local fault-direction indicative data measured by a measuring unit (20) at the measurement location (12). The transmission line data includes, from the local fault-direction indicative data, only a current signal. The fault direction indicator device (30) further comprises a decision logic section operatively connected to the input section, the decision logic section comprising a first fault direction determining program for determining the fault direction from the transmission line data and for outputting the determined fault direction as a first fault direction indicator.

FIG. 1

**Description**

Aspects of the invention relate to a fault direction indicator device for a power distribution systems, in particular to a fault direction indicator device for indicating a direction of a fault on a transmission line. Further aspects relate to a directional overcurrent relay including such a fault direction indicator device and further including a circuit breaker. Further aspects relate to methods of determining a fault direction of a fault on a transmission line of a power distribution system, and of configuring a fault direction indicator device.

Technical background:

Directional overcurrent relays are widely used for protection of power distribution systems such as radial and ring subtransmission systems and other distribution systems. These relays have a functionality enabling them to determine a fault direction. Here, a fault generally means an overcurrent, mainly from a short circuit. Further, the fault direction is in most cases a binary information, indicating whether the fault is a forward fault or a backward fault. Here, in a power line connecting an upstream power source to a downstream power distribution system portion (with the normal power direction from the upstream to downstream), the forward direction is, say, downstream of the relay, and the backward, or reverse, direction is upstream of the relay.

More generally, the fault direction is an indicator at which side of a measurement location the fault has occurred. In the above example, there are two directions, forward and backward. If the measurement location is at a node of the power network having more than two sides, there may be more than just a forward or a backward direction. For example, in a node to which one backward line portion and two forward line portions are connected, the fault direction may include the cases "forward-1", "forward-2", and "backward".

The directional information allows to obtain a more detailed information about the location at which a fault has occurred. This information may be used to inactivate a smaller portion of the power distribution system in the case of a fault. For example, a conventional ring-main feeder e.g. for domestic supplies has breakers at its T-junctions. If there is a fault in any of the lines of this conventional ring-main feeder, usually the whole line section is cut. This situation can be improved when more detailed fault directional information is obtained. To this purpose, directional overcurrent relays can be put in the line along with breaking switches. With such a relay-switch system, a reference voltage measurement allows computing the fault current and its direction. The directional information can then be used to cut only the appropriate section, not the whole line.

Known directional overcurrent relays rely on a reference voltage phasor, also known as "voltage polarization", for estimating the direction of the fault. When a fault occurs, the fault current has a characteristic phase angle relative to the voltage phasor, the phase angle depending on the fault direction. The fault direction is determined by judging the current phasor (complex current value whose real part is the actual AC current) against a reference voltage phasor (industrially termed as 'voltage polarization') measured at a measurement location on the power line. This requires measurement of both current and voltage. This approach becomes unreliable when the fault is in too close proximity to the relay, because in this case the relay is almost grounded by the short circuit. Also, the computation of the voltage phasor and the relative fault current properties is relatively complex and generally requires a digital signal processor (DSP) within the relays.

Such overcurrent relays including a voltage measurement unit are expensive. Since they have to be used in large number for the above arrangement, this is a major cost factor.

Summary of the invention

In view of the above, fault direction indicator device according to claim 1, a directional overcurrent relay according to claim 12, and methods according to claims 13 and 15 are provided. Further advantages, features, aspects and details that can be combined with embodiments described herein are evident from the dependent claims, the description and the drawings.

According to a first aspect, a fault direction indicator device for indicating a direction of a fault on a transmission line of a power distribution system is provided. The fault direction indicator device comprises an input section adapted to receive transmission line data, the transmission line data including local fault-direction indicative data measured by a measuring unit at the measurement location. The term "local fault-direction indicative data" consists of voltage and current signals, this list is exhaustive. The transmission line data includes, from the local fault-direction indicative data, only a current signal, in particular a current signal obtained from a current measurement at the measurement location by the measuring unit. The fault direction indicator device further comprises a decision logic section operatively connected to the input section, the decision logic section comprising a first fault direction determining program for determining the fault direction from the transmission line data and for outputting the determined fault direction as a first fault direction indicator. In other words, no voltage signal or mixed current-voltage signal is included in the transmission line data: The transmission line data is free of data resulting from a voltage measurement.

According to a second aspect, a method of determining a fault direction of a fault on a transmission line of a power distribution system relative to a measurement location of the transmission line is provided. The method comprises: measuring local fault-direction indicative data at the measurement location, wherein the measuring includes only measuring a current but not measuring a voltage of the transmission line; transmitting a current signal indicative of the measured current to a decision logic section (in particular, hereby not transmitting any voltage signal); determining a fault direction from the current signal by a first fault direction determining program, such as a program programmed according to a machine learning algorithm, of the decision logic section; and outputting the resulting determined fault direction as a first fault direction indicator. The current signal may be pre-processed during the transmission, in particular a feature vector may be extracted from the current signal and transmitted.

According to a third aspect, a method of configuring a fault direction indicator device having a decision logic section is provided. The method comprises: inputting local fault-direction indicative data of a transmission line to the decision logic section , wherein the local fault-direction indicative data includes only current signals but no voltage signals, the current signals including a plurality of signals corresponding to a respective plurality of faults; inputting, to the decision logic section , a respective fault direction associated to each of the faults; and creating, by a machine learning program of the decision logic section , a map between the current signals and the respective fault directions, by applying a machine learning algorithm to the current signals and the respective fault directions inputted to the decision logic section.

The above aspects allow determining a fault direction reliably and efficiently at reduced cost. The cost reduction is, among other factors, possible because there is no voltage measurement. Further, this method allows estimating the direction of a fault even if the fault is located near the relay or sub-station, known as 'close-in fault'. The direction of such faults is difficult to estimate by using a conventional voltage-based method, because the input voltages at the measurement location tend to become zero. Since in the above aspects the voltage is explicitly excluded, there is no such problem here.

Brief description of the Figures:

The details will be described in the following with reference to the figures, wherein

Fig. 1    shows a power distribution system including a measuring unit and a fault direction indicator device according to an embodiment;

Fig. 2    shows the measuring unit and the fault direction indicator device of Fig. 1 in more detail;

Fig. 3    shows a fault direction indicator device according to a further embodiment including further components;

Fig. 4    shows a decision logic section of a fault direction indicator device according to a further embodiment;

Fig. 5    shows a power distribution system including a circuit breaker according to an embodiment; and

Fig. 6    shows a current-phasor diagram useful for understanding aspects of the invention.

Detailed description:

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment applies to a corresponding part or aspect in another embodiment as well.

Device: General description

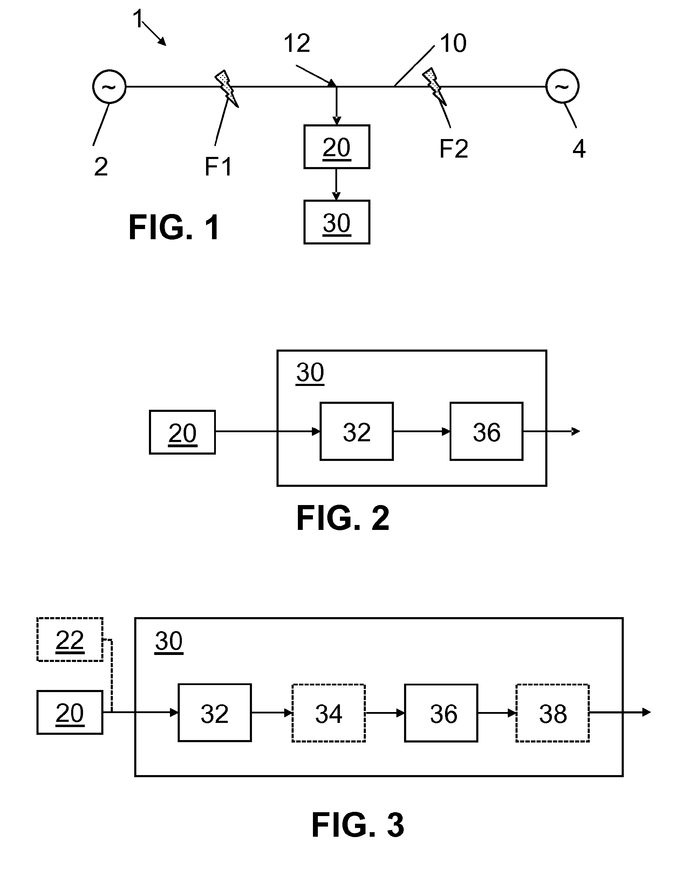

Fig. 1 shows a power distribution system 1. Herein, a transmission line 10 connects a power source 2 (e.g. a distributed generation source bus) to a grid 4, such as to feed the grid 4 from the power source 2. Further, a measuring unit 20 is connected to the transmission line 10 at a measurement location 12. Relative to the measurement location 12, the transmission line is divided into an upstream, or backward, portion (side of the source 2) and a downstream, or forward, portion (side of the grid 4).

The measuring unit 20 is adapted for measuring a current flowing in the transmission line 10 at the measurement location 12. A fault direction indicator device 30 receives the measured current data (more generally, transmission line data) from the measuring unit, and has the functionality of indicating a direction of a fault on a transmission line 10 from the current data, i.e. of indicating whether the fault has occurred in the backward direction or in the forward direction relative to the measurement location 12.

The measurement unit 20 comprises a current sensor for measuring the current at the measurement location 12 of the transmission line 10. It does not comprise any voltage sensor. The measurement unit 20 is operatively coupled to the fault direction indicator device 30 (more precisely, to the input section 32 thereof shown in Fig. 2 below) for transmitting the current signal obtained from the current measurement to the fault direction indicator device 30 (to the input section 32).

As will be described in more detail below, the fault direction indicator device 30 can indicate the directional information by only using the current data provided from the measuring unit 20, without any reference voltage. This results in a major cost advantage, because there is no need for a voltage sensor in the measuring unit 20. Since a typical power distribution system requires many relays as the one depicted in Fig. 1, the overall cost advantage can be significant.

Generally, the configuration will be more complex, e.g. when the transmission line 12 is not directly connected to the power source 2 upstream, but is connected via a bus of a more complex network. Similarly, the downstream configuration may be more complex. Also, for simplicity only a single-phase line is shown. Generally, the network will have more phases (typically three phases). The case of more than one single-phase line will be discussed further below.

Now, with reference to Fig. 2, the fault direction indicator device 30 of Fig. 1 is described in more detail. The fault direction indicator device 30 has an input section 32 and a decision logic section 36. The input section 32 is adapted to receive transmission line data, i.e. data relating to the transmission line, and more particularly the current signal from the measuring unit 20, without receiving any voltage signal.

The above can be phrased differently by using the concept of local fault-direction indicative data measured by the measuring unit 20 at the measurement location 12. A priori, the term "local fault-direction indicative data" consists of voltage and current signals. This list is exhaustive: any local fault-direction indicative data is a voltage or a current signal, and there is no further local fault-direction indicative data than these. Here, "signals" also includes processed quantities derived from the respective voltages or currents.

Thus, the transmission line data received by the input section 32 includes local fault-direction indicative data measured by the measuring unit 20 at the measurement location 12 (namely, the current signal). The transmission line data received includes no further local fault-direction indicative data besides current signal. This means that no voltage signal or mixed current-voltage signal is included in the transmission line data. In other words the transmission line data is free of data resulting from a voltage measurement.

The decision logic section 36 is operatively connected to the input section 32 for receiving the transmission line data (which also includes the case of data processed from the transmission line data). The decision logic section 36 comprises a first fault direction determining program for determining the fault direction from the transmission line data and for outputting the determined fault direction as a first fault direction indicator. Implementations for the decision logic section 36 are described in more detail further below.

Thus, the fault direction indicator device 30 of Figs. 1 and 2 allows for determining the fault direction of a fault on the transmission line 10 as follows:

- the local fault-direction indicative data (namely, a current but not a voltage of the transmission line 10) is measured at the measurement location 12 by the measurement unit 20;

- a current signal indicative of the measured current is transmitted from the measurement unit 20 and via the input section 32 to the decision logic section 36 of the fault direction indicator device 30. Hereby, no voltage signal is transmitted. The signal may be pre-processed during the transmission, in particular a feature vector (see below) may be extracted;

- in the decision logic section 36, a first fault direction determining program determines a fault direction from the current signal; and

- the resulting determined fault direction is outputted as a first fault direction indicator.

The first fault direction determining program may be a program programmed according to a machine learning algorithm, or according to any further algorithm as described below.

Fault direction determining_program: General introduction

In the following, the decision logic section 36, and more particularly the first fault direction determining program will be described in more detail. The program's task is to extract the direction information from the transmission line data, i.e. above all from the current signals, in case of a fault. With the algorithms described below, the direction of the fault is detected from current measurements, without using voltage signals.

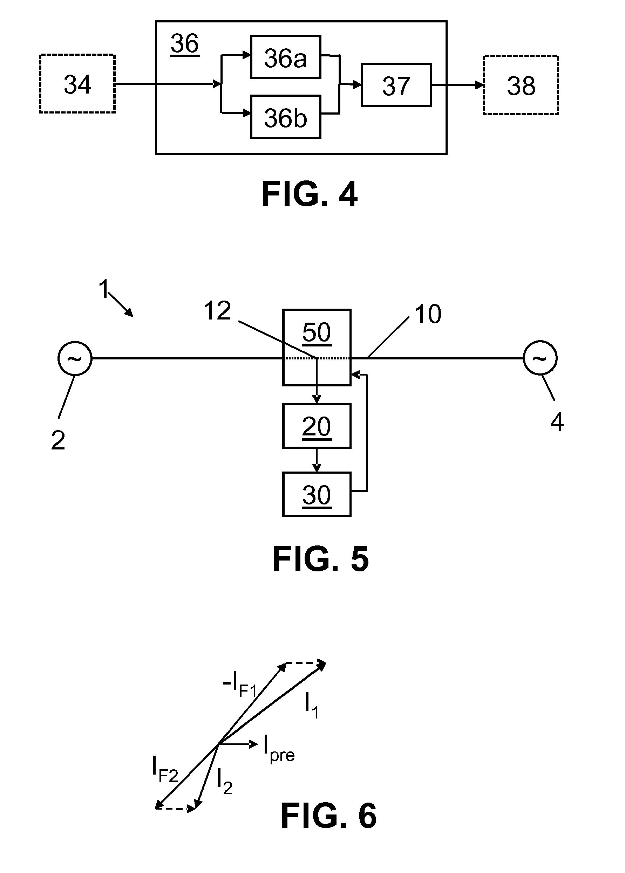

First, with reference to Figs. 1 and 6, the current will be described using a simple model. Fig. 1 shows two possible faults of the power transmission line 10, a downstream fault F2 and a upstream fault F1.

In the case of upstream fault F1, the fault current $I_{F1}$ flowing from the grid 4 to the fault F1 is

$$I_{F1} = V_4 / Z_{4\text{-}F1} \qquad (1),$$

wherein $V_4$ is the voltage at the grid 4, and wherein $Z_{4\text{-}F1}$ is the impedance between the grid 4 and the fault location of fault F1. (Here, all quantities are AC quantities given as phasors, i.e. complex numbers). Likewise, in the case of downstream fault F2, the fault current $I_{F2}$ flowing from the source 2 to the fault F2 is

$$I_{F2} = V_2 / Z_{2\text{-}F2} \qquad (2),$$

wherein $V_1$ is the voltage at the source 1, and wherein $Z_{2\text{-}F2}$ is the impedance between the source 2 and the fault location of fault F2.

The impedances $Z_{4\text{-}F1}$ and $Z_{2\text{-}F2}$ are not exactly known and may be different from one another. However, because the line 10 is generally almost purely inductive with negligible resistance and capacitance, the impedances $Z_{4\text{-}F1}$ and $Z_{2\text{-}F2}$ are almost purely imaginary with negative imaginary part.

Now, if $I_{pre}$ is the prefault current from the source 2 to the grid 4, then, the total post-fault current $I_1$ in the case of upstream fault F1 is

$$I_1 = I_{pre} - I_{F1} = I_{pre} - V_4 / Z_{4\text{-}F1} \qquad (3).$$

Likewise, the total post-fault current $I_2$ in the case of downstream fault F2 is

$$I_2 = I_{pre} + I_{F2} = I_{pre} + V_2 / Z_{2\text{-}F2} \qquad (4).$$

Please note the difference in sign, which is due to the fault current $I_{F1}$ being directed reverse to the pre-fault current (from grid 4 to fault F1), whereas the fault current $I_{F2}$ is directed along the pre-fault current (from source 2 to fault F2).

This sign difference is visible in the current-phasor diagram of Fig. 6. Here, the current jumps from $I_{pre}$ to $I_1$ or $I_2$, as given in Eqns. (3) and (4), in the case of a upstream or downstream fault, respectively. Here, the short-circuit current phasors $-I_{F1}$ and $I_{F2}$ by which the current phasor may jump have mutually opposite sign due to the sign differene in Eqns. (3) and (4), and due to $Z_{4\text{-}F1}$ and $Z_{2\text{-}F2}$ being both imaginary with negative imagine part. Hence, the phase angle of the post-fault current ($I_1$ or $I_2$) relative to the pre-fault current $I_{pre}$ has a phase change depending on and indicating the fault direction: For example, a positive phase angle change may indicate fault in the upstream direction, while a negative in the downstream direction. Hence, it is possible to judge the direction of the post-fault current (forward and backward/reverse) with respect to $I_{pre}$ only, without requiring any bus voltage. In summary, the above description shows that generally the current alone contains sufficient information for allowing to determine the fault direction.

<u>Fault direction determining_program: Direct calculation</u>

In the following, algorithms are described by which the fault direction determining program may be programmed in order to extract the fault direction information from the current signals in a reliable and efficient manner. To this purpose, there are a large number of possible approaches.

Generally, one algorithm is based on comparing the pre-fault with the post-fault currents. Here, the decision logic section is input current signals including a pre-fault current signal $I_{pre}$ and a fault current signal (in the example of Fig. 6, the predicted fault current signals could be $I_1$, $I_2$). Then, based on these data, the fault direction determining program is programmed to determine a relation between the fault current signal (such as $I_1$ or $I_2$) and the pre-fault current signal $I_{pre}$.

Such a relation may be a differential quantity such as a difference or an angular difference between the pre-fault current signal and the fault current signal. One possibility for obtaining the relation is to calculate the pre-fault and post-fault current phasors directly. Then, the relation may be calculated as the difference phasor $DI$ or a phase difference between the pre-fault and post-fault current phasor.

In a next step, the fault direction is determined from the determined relation. To this purpose, the relation is evaluated using a predetermined set of rules, which may be obtained from empirical data or from a model such as the model described above, see Eqns. (1) to (4) above. These rules assign a fault direction to some characteristics of the relation between the fault and the pre-fault signal. For example, a region 1 for $DI$ or for the complex phase angle of $DI$ may be attributed to a upstream fault, and another region 2 may be attributed to a downstream fault.

For this algorithm, at least an approximation of the current phasor is needed. For estimating the current phase angle, various standard current phasor computations may be used, e.g. using Kalman filter. Other standard methods include discrete Fourier transform (DFT), recursive least square method or other known methods, such as the methods described e.g. in A.G. Phadke, J.S. Thorp, Synchronized Phasor Measurements and Their Applications, Springer, New York, 2008. These methods usually require resource-intensive calculations. Hence, for a sufficiently fast response a digital signal processor (DSP) is generally required.

Fault direction determining_program: Machine learning

While the above description was based on the current phasors, it is understood that the directional information can also be extracted from other current data by other means, not necessarily relying on current phasors. Such alternative methods could allow for less resource-intensive calculations, by avoiding explicit calculation of the current phasor. Such methods may allow for simpler and cheaper hardware with limited computational resources, e.g. an 8- or 16-bit microcontroller instead of a DSP. For example, the fault direction determining program may be programmed according to a machine learning algorithm for determining the fault direction. Such a machine learning algorithm may include a blackbox modeling technique such as a neural network. Such a machine learning algorithm, without the need of calculating the current phasor, may alleviate the requirement of computational resources considerably. Further, it may allow classifying the fault types, e.g. using a nonlinear modeling technique.

The blackbox modeling system may be e.g. a neural network or a support vector machine. The system can be trained to produce a classification type output depending on an input describing the measured current (or, more precisely, the received transmission line data including the local current signals, but no local voltage signals). The input may be the raw current, or some post-processed data derived therefrom, such as the feature vectors given in Table 1 below. In the simplest case, the classification type output is binary, e.g. +1 indicating fault in forward direction, -1 for fault in backward direction. Also, more complex output is possible, e.g. an output further classifying the fault type, or a fuzzy output giving a likelihood. Any machine-learning program such as a neuronal network program is in principle suitable. Further suitable machine-learning algorithms include polynomial curve fitting, support vector machine, kernel methods etc. A particularly suitable algorithm is an Elman neuronal network algorithm or a similar algorithm being capable of interpreting extended patterns in the data. Some further examples of suitable machine-learning algorithms and further details can be found in A. Ukil, Intelligent Systems and Signal Processing in Power Engineering, Springer, Heidelberg, 2007.

The machine-learning algorithm of the decision logic section 36 needs to be trained, or configured, in order to produce meaningful results. The training can be performed as follows: First, local fault-direction indicative data of the transmission line 10 are input to the decision logic section 36. This fault-direction indicative data may be simulated or recorded or currently measured data from the measurement unit 20. In its data structure, the inputted data corresponds to the of data that will be input to the decision logic section 36 during normal operation (i.e. in particular the local fault-direction indicative data includes only current signals but no voltage signals). These current signals should include a plurality of signals corresponding to a respective plurality of faults. The fault direction of these faults should be known from other sources, e.g. from the simulation or from a separate fault direction measurement using a standard method. The respective fault direction associated to each of the faults is also input to the decision logic section 36.

This input allows the machine learning program of the decision logic section 36 to create a map between the current signals and the respective fault directions, by applying the machine learning algorithm to the current signals and the respective fault directions inputted to the decision logic section 36. During the training, the machine-learning algorithm acquires the capability of recognizing patterns within the input data (here: current signals) and relating these patterns to the corresponding output (here: fault direction). Due to this capability, a well-trained machine learning algorithm is able to predict the correct fault direction with high accuracy.

Input data, feature vector:

The decision logic section may receive the raw measured current signals, but alternatively it may also receive some pre-processed current data as input. With pre-processed data, it may be easier for the decision logic section to determine the fault direction than from the raw current data. In particular, appropriately pre-processed data may have a more manageable size while retaining most (or at least a sufficient amount) of the directional information contained in the raw current data, such as to be still indicative of the fault direction. Also, the reduced data size may allow the hardware cost of the directional indicator device to be reduced still further.

Fig. 3 shows a fault direction indicator device according to a further embodiment, which allows pre-processing of data. In particular, besides the elements already described with reference to Fig. 2, the fault direction indicator device 30 of Fig. 3 further comprises a signal pre-processor section 34. The signal pre-processor section 34 is operatively coupled to the input section 32 for constructing a feature vector from the transmission line data. The term "feature vector" describes any pre-processed data that is indicative of the fault direction (i.e. potentially indicative at least in some instances). The term "feature vector" is meant to include data organized in any way, and therefore also includes e.g. scalars, i.e. vectors with only one entry, matrices, i.e. vectors of vectors, and lists. The signal pre-processor section 34 is, further, operatively coupled to the decision logic for transmitting the feature vector to the decision logic. This allows the decision logic to use the feature vector as an input for the fault direction determining program.

The signal pre-processor section 34 may generate any feature vector of the following table (Table 1). Also, the data described in two or more entries of the table below may be combined in a larger feature vector. Also, the feature vector may comprise additional data beside the data from Table 1.

**Table 1:**

| Feature vector | Description |
| --- | --- |
| Current samples | Time-domain analog phase current (single or three-phase), e.g. digitally sampled at a particular sampling frequency. |
| Variations of current samples | The variations may include the variations (in particular, time-averaged variations) of<br>• rectified current samples,<br>• sum of current samples,<br>• peak values,<br>• root mean square value,<br>• filtered (over certain frequency bandwidth) current samples,<br>• denoised current samples,<br>• algebraic combination of three-phase currents |
| Current phasor | Phasor representation (e.g. angle and/or magnitude) of current samples. The phasor representation could be also synchronized. |
| Frequency domain values of current | Magnitude and/or phase angle of current samples (single or three-phase in frequency domain), obtained e.g. using discrete Fourier transform. |
| Variation of frequency domain values of current | Generally, similar variational parameters such as the ones described above for the current samples may also be obtained from the frequency domain values of current. Here, positive, negative or zero sequence component of phase currents may be used. This can be achieved by symmetrical component analysis. |
| Wavelet coefficients (smoothed, detailed) | Wavelet transform decomposes a signal into simultaneous time-freqeuncy domain views. Specific mother wavelets could be used up to suitable scales to decompose current signals into smoothed (time-domain view) and detailed (frequency-domain view) coefficients for further utilization. |
| Zero crossing time (ZCT) signal | Time-domain recording of the instants when the current signal (AC and approx. sinusoidal) crosses zero. This can be a single phase or a three-phase current signal. It can be only upside, only downside, or both up & downside. |

(continued)

| Feature vector | Description |
| --- | --- |
| Frequency domain values of ZCT | Magnitude and phase angle of zero crossing time signal (directly measured/computed from current samples), obtained using discrete Fourier transform. |
| Directional feature current variation | A directional feature current variation may be defined as follows:<br><br>$$DF = \left| i_{\text{pre-fault}} + i_{\text{fault}} \right| - \left| i_{\text{fault}} \right|$$<br><br>Generally in this document, an equation as the above definition shall also include the case of an averaged quantity, averaged over a measurement cycle such as to reduce noise. So, the above definition may for example be implemented as follows:<br><br>$$DF(j) = \sum_{j=k}^{k+n} \left| i(j) + i(j-n) \right| - \sum_{j=k}^{k+n} \left| i(j) \right|$$<br><br>where<br>$i$ is a measured current signal (from the measurement unit 20)<br>$k$ is most recent samples after fault<br>$n$ is number of samples per cycle |

.

In Fig. 3, the signal pre-processor section 34 is shown in dashed lines. This means that the signal pre-processor section 34 is an optional section. Further optional sections or devices, shown in Fig. 3 in dashed lines, may be combined modularly with each other in any manner. As a further optional device, Fig. 3 also shows an optional fault indicator device 22. In this embodiment, the input section 32 of the fault direction indicator device 30 is coupled to the fault indicator device 22 for receiving a fault information therefrom. The fault information is

data indicating whether, and possibly when, a fault occurred. This does not mean that the fault information would need to be a binary yes/no information. Instead, the fault information may also indicate e.g. only a likelyhood of a fault. Thus, in this embodiment the transmission line data further comprises a fault information field received from a fault indicator device 22, the fault information field indicating whether a fault occurred.

This fault information field can be e.g. included in the feature vector or be used for constructing the feature vector. It may also be used for determining the prefault and the fault current (instead of determining it from data inherent to the current, such as current jumps). Thus, the fault information from the fault indicator device 22 may further improve the accuracy of the determined fault direction.

Further, Fig. 3 shows an optional communication section 38 of the fault direction indicator device 30. The communication section 38 is coupled to the decision logic section 36 for receiving the determined fault direction (i.e. the fault indicator) therefrom, and is adapted for transmitting the determined fault direction (fault indicator) to another unit of the power distribution network.

Further algorithms

Returning to the description of the decision logic section 36 of Figs. 2 and 3, also other algorithms may be used therein, in addition to or in place of the algorithms described above. In particular, the fault direction determining program may be programmed according to any one of the algorithms of Table 2 below. Here, the algorithm may use any of the appropriate input vectors given in Table 1 above.

**Table 2:**

| Algorithm | Definition, Implementation |
|---|---|
| Min-Max logic | Decision block which checks for minimum and/or maximum values of a set. Here, the set may include jumps of the current phasor, e.g. phase angle jumps. (Particularly suitable input vectors are: current samples or variations, current phasor, directional feature, frequency domain values, wavelet coefficients) |
| Comparator logic | Decision block which checks whether an input value is greater or less than certain preset value, or compares two input values and determines whether the first one is greater/less than or equal to the second one. (Particularly suitable input vectors are: current samples or variations, zero crossing time signal, wavelet coefficients, directional feature, current phasor, frequency domain values of current and ZCT) |
| Sign logic | Decision block which compares polarity (sign) of two input values, and determines whether the first one is of same/different sign than the second. (Particularly suitable input vectors are: current phasor, frequency domain values of current and ZCT, directional feature) |
| Frequency analysis decision | Decision block monitors changes in input features' phase angle values and/or phase angle signs and/or magnitude values, and provides output in maximum/minimum manner or greater/less than manner. (Particularly suitable input vectors are: current phasor, frequency domain values of current and ZCT, wavelet coefficients) |
| Blackbox models | These take into account input parameter and maps it to the output values (e.g. forward/ reverse fault direction) without assuming any prior knowledge. This typically involves machine learning techniques like the ones described above. This block would usually require training from example input samples and corresponding output values, as described above. The trained models would then decided on test values. The models could be pre-trained or trained online. (Any input vectors are suitable) |
| Mathematical models | Simple or advanced pre-defined mathematical models to relate the input parameters and output values (e.g. forward/backward fault direction). These might typically involve least square technique, curve fitting, linear/nonlinear regression, time-series analysis, principal component analysis, Kalman filter, etc. (Any input vectors are suitable) |
| Fuzzy Logic | Fuzzy decision logic with rule-base like If-Then logic: *if input is x then output is y* Crisp output values can be obtained by using defuzzification procedures like Mamdani method, Takagi-Sugeno model. Further details are described e.g. in B. Kosko, Fuzzy Engineering, Prentice-Hall Inc., 1996. (Any input vectors are suitable) |

With the exception of the machine-learning algorithm, all other algorithms can be implemented as rule-based algorithms which determine the fault direction based on a predetermined set of rules.

Fault direction determining program: Two programs

Now, with reference to Fig. 4, a decision logic section 36 according to a further embodiment will be described. The decision logic 36 comprises a first fault direction determining program 36a, which corresponds e.g. to any fault direction determining program 36 described above herein. Thus, the first fault direction determining program 36a determines the fault direction from the transmission line data and outputs it as a first fault direction indicator. The decision logic 36 further comprises a second fault direction determining program 36b, which again corresponds to any fault direction determining program described herein. Thus, also the second fault direction determining program 36b determines the fault direction from the transmission line data, and outputs it as a second fault direction indicator. The first fault direction determining program 36a and the second fault direction determining program 36b may run either on the same hardware (e.g. in parallel) or on different pieces of hardware.

Further, the decision logic 36 comprises a decision joining program 37 for determining a fault direction from the first fault direction indicator and from the second fault direction indicator. Then, the resulting determined fault direction is outputted by the decision joining program 37 as a third fault direction indicator.

In the case of the fault direction indicators being in mutual disagreement over the fault direction, the decision joining program 37 may determine the fault direction by decision weighting, i.e. by attributing different weights to the first and the second fault direction indicator, and by taking the result with the higher weight. The weights may be determined by the respective fault direction determining programs 36a and 36b themselves in dependence of their input data. Also, in the case of mutual disagreement (and possibly of similar weights associated to each of the disagreeing sides), the decision joining program 37 may issue an "inconclusive information" output which may, in a circuit breaker configuration, then possibly lead to the breaker disabling a larger portion of the network.

The above decision joining can be generalized to three or more fault direction determining programs 36a and 36b. The decision joining program 37 may include a (possibly weighted) voting routine. Further, an uneven number of fault direction determining programs may be provided, such as to reduce "inconclusive information" output. In the case of three or more fault direction determining programs.

The use of more than one fault direction determining program is particularly useful when different types of fault direction determining programs are used. So, for example, the first fault direction determining program can be programmed according to a machine learning-based algorithm, and the second fault direction determining program can be programmed according to a rule-based algorithm. Then, in the case of mutual agreement between the different approaches, the risk of an error is reduced and the stability is increased. Also, errors can be detected easier because even if one fault direction determining program issues the wrong result, this error may be detected and overridden or at least lead only to an "inconclusive information" output, and not to a more problematic wrong output.

Relay / Circuit breaker

While the fault direction indicator device 30 is useful already on its own, it is particularly useful when integrated into a monitoring system or a circuit breaker system (relay). To this purpose, the optional communication section 38 (see Fig. 3) of the fault direction indicator device 30 allows it to transmit the determined fault direction (i.e. the fault direction indicator indicating e.g. forward or backward fault) to another unit of the power distribution network, e.g. to a circuit breaker, to a control unit, or to a supervising unit for supervising the transmission line 10.

Fig. 5 shows a configuration in which the power distribution system 1 includes a circuit breaker 50 (e.g. an REF circuit breaker from ABB). The circuit breaker 50 is operatively coupled to the fault direction indicator device 30, possibly via a central control unit (not shown). Thereby, the circuit breaker can receive, from the fault direction indicator device 30 (more precisely, from the communication section 38 shown in Fig. 3), at least one of the first, second, and third fault direction indicator, or another fault direction information obtained therefrom, such as likelihood information or an "inconclusive information" output. This output may then trigger the circuit breaker 50, or the central control unit, to take appropriate action, e.g. to cut the appropriate section, not the whole line 10. In the case of an "inconclusive information" output, a larger portion such as the whole line 10 may be cut.

Power flow direction

In some embodiments, the decision logic section 36 (see Fig. 2 and 3) further comprises a power flow direction determining program for determining a power flow direction from the transmission line data. The power flow direction determining program is not shown in any of the figures, but is configured and programmed in the same manner as the fault direction determining program described above. In fact, both the input and the output of the power flow direction determining program are very similar to the input and the output of the fault direction determining program, because power flow direction and fault direction are closely correlated: Namely, the fault direction determines the current flow, and the current flow determines the power flow. For example, if there is upstream fault (F1 in Fig. 1), the current flows, at the measurement location 12, in the direction from the grid 4 towards the generating station 2, which means power flows from grid to generating stations.

Thus, the models and, for example, the machine-learning algorithms that have been described for the fault direction determination can also be used for the power flow direction determination. The only addition is that in the rule-based approaches, the direction of current for each fault, as indicated above, has to be included in the model. In the machine-learning approaches, the teaching has to be based on the power flow, instead of or in addition to the fault direction, as the relevant output quantity. The monitoring of power flow can be performed in regular intervals or permanently, independently of a fault.

The additional power flow information from the power flow direction determining program may also be used for controlling the circuit breaker 50 shown in Fig. 5. Power flow from the grid 4 to the source 2 is not wanted, since thereby energy is wasted. Thus, if this unwanted power flow is detected (possibly over a predetermined time interval), circuit breaker 50 may be activated to break the appropriate section such as to limit the waste of energy.

So, in this case the device 30 can be described as a hook-up power flow direction device to see if there is no unwanted power flow. This device is specially useful for distributed generation units like wind/solar power systems. These units might stop producing, and in this case the power will start flowing in opposite direction (from grid 4 to generator 2). From the point of view of the currents involved, this situation is similar to an upstream fault condition (as described above), except that there is no actual fault. Hence, the directional device could detect this kind of situation with the algorithms described herein, and activate the circuit breaker 50 or issue a warning.

Three phases:

In the above discussion, only a single-line system has been described. In reality, most power distribution systems have three phases. For such a three-phase system, the devices and methods described herein can be applied to each phase separately. Alternatively, the device can also be fed a single representation for the currents in all three phases. As the single representation, generally the positive sequence component of the current is used. This positive sequence component of the current has the advantage that it is present in all types of faults. Then, the above description can be applied with the current signal being the positive sequence component.

While the foregoing is directed to embodiments, other and further embodiments may be devised without departing from the basic scope determined by the claims.

**Claims**

1. Fault direction indicator device (30) for indicating a direction of a fault on a transmission line (10) of a power distribution system (1) relative to a measurement location (12) of the transmission line (10), the fault direction indicator device (30) comprising:

   - an input section (32) adapted to receive transmission line data, the transmission line data including local fault-direction indicative data measured by a measuring unit (20) at the measurement location (12), wherein the transmission line data includes, from the local fault-direction indicative data, only a current signal ($I_{pre}$, $I_1$, $I_2$); and
   - a decision logic section (36) operatively connected to the input section (32), the decision logic section (36) comprising a first fault direction determining program for determining the fault direction from the transmission line data and for outputting the determined fault direction as a first fault direction indicator.

2. Fault direction indicator device according to claim 1, wherein the first fault direction determining program is programmed according to a machine learning algorithm.

3. Fault direction indicator device according to any one of the preceding claims, wherein the decision logic further comprises

   - a second fault direction determining program, such as a program programmed according to a rule-based algorithm, for determining the fault direction from the transmission line data and for outputting the determined fault direction as a second fault direction indicator, and
   - a decision joining program for determining a fault direction from the first fault direction indicator and from the second fault direction indicator, and for outputting the resulting determined fault direction as a third fault direction indicator.

4. Fault direction indicator device according to any one of the preceding claims, wherein the first fault direction determining program and, if present, the second fault direction determining program are programmed according to at least one respective algorithm selected from the group consisting of Min-Max algorithm, Comparator algorithm, Sign algorithm, Frequency analysis algorithm, Blackbox algorithm, Mathematical model-based algorithm, and Fuzzy Logic algorithm.

5. Fault direction indicator device according to any one of the preceding claims, wherein the current signal includes a pre-fault current signal ($I_{pre}$) and a fault current signal ($I_1$, $I_2$); and wherein the first fault direction determining program is programmed to

   a) determine a relation between the fault current signal ($I_1$, $I_2$) and the pre-fault current signal ($I_{pre}$), and to
   b) determine the fault direction from the determined relation.

6. Fault direction indicator device according to any one of the preceding claims, further comprising a signal pre-processor section (34) operatively coupled to the input section (32) for constructing a feature vector indicative of the fault direction from the transmission line data, and operatively coupled to the decision logic for transmitting the feature vector to the decision logic.

7. Fault direction indicator device according to any one of the preceding claims, wherein the feature vector contains at least one element selected from the group consisting of current sample value(s), variation of current sample values, Current phasor(s), Frequency domain value(s) of current, Variation of frequency domain values of current, Wavelet coefficient(s), in particular smoothed or detailed wavelet coefficient(s), zero crossing time (ZCT) signal, Frequency domain values of ZCT, and Directional feature (DF).

8. Fault direction indicator device according to any one of the preceding claims, wherein the transmission line data further comprises a fault information field received from a fault indicator device (22), the fault information field indicating whether a fault occurred.

9. Fault direction indicator device according to any one of the preceding claims, wherein the decision logic section further comprises a power flow direction determining program for determining a power flow direction from the transmission line data.

10. Fault direction indicator device according to any one of the preceding claims, further comprising a communication section (38) for transmitting the determined fault direction to another unit of the power distribution network..

11. Fault direction indicator device according to any one of the preceding claims, further comprising the measurement unit (20), the measurement unit (20) comprising a current sensor for measuring the current at the measurement location (12) of the transmission line (10) but no voltage sensor, wherein the measurement unit (20) is operatively coupled to the input section (32) for transmitting the current signal obtained from the current measurement to the input section (32).

12. Directional overcurrent relay, comprising a fault direction indicator device according to any one of the preceding claims and a circuit breaker (50) operatively coupled to the fault direction indicator device (30) for receiving, from the fault direction indicator device (30), at least one of the first, second, and third fault direction indicator, or another fault direction information obtained therefrom.

13. Method of determining a fault direction of a fault on a transmission line (10) of a power distribution system (1) relative to a measurement location (12) of the transmission line (10), the method comprising

- measuring local fault-direction indicative data at the measurement location (12), wherein the measuring includes only measuring a current but not measuring a voltage of the transmission line (10);
- transmitting a current signal indicative of the measured current to a decision logic section (36) ;
- determining a fault direction from the current signal by a first fault direction determining program, such as a program programmed according to a machine learning algorithm, of the decision logic section (36), and outputting the resulting determined fault direction as a first fault direction indicator.

14. Method according to claim 13, further comprising

- determining a fault direction from the current signal by a second fault direction determining program, such as a program programmed according to a rule-based algorithm, of the decision logic section (36), and outputting the resulting determined fault direction as a second fault direction indicator; and
- determining a fault direction from the first fault direction indicator and from the second fault direction indicator, and outputting the resulting determined fault direction as a third fault direction indicator.

15. Method of configuring a fault direction indicator device (30) having a decision logic section (36), the method comprising

- inputting local fault-direction indicative data of a transmission line (10) to the decision logic section (36), wherein the local fault-direction indicative data includes only current signals ($I_{pre}$, $I_1$, $I_2$) but no voltage signals, the current signals ($I_{pre}$, $I_1$, $I_2$) including a plurality of signals corresponding to a respective plurality of faults;
- inputting, to the decision logic section (36), a respective fault direction associated to each of the faults; and
- creating, by a machine learning program of the decision logic section (36), a map between the current signals and the respective fault directions, by applying a machine learning algorithm to the current signals and the respective fault directions inputted to the decision logic section (36).

**FIG. 1**

**FIG. 2**

**FIG. 3**

**FIG. 4**

**FIG. 5**

**FIG. 6**

**Europäisches Patentamt**
**European Patent Office**
**Office européen des brevets**

## EUROPEAN SEARCH REPORT

**Application Number**

EP 09 16 6352

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 012 133 A (THOMAS & BETTS INT [US]) 7 January 2009 (2009-01-07)<br><br>* paragraphs [0006], [0012] - [0016], [0023], [0025] - [0027], [0031], [0034], [0036] - [0039]; figures 1,5 * | 1,2,4,5, 8,10,11, 13-15 | INV. H02H3/08<br><br>ADD. H02H7/26 |
| Y | | 3,6,7,9, 12 | |
| Y | EISSA ET AL: "A new digital relaying scheme for EHV three terminal transmission lines" ELECTRIC POWER SYSTEMS RESEARCH, ELSEVIER, vol. 73, no. 2, 1 February 2005 (2005-02-01), pages 107-112, XP025269589 ISSN: 0378-7796 [retrieved on 2005-02-01] * the whole document * | 3,9,12 | |
| Y | US 5 734 575 A (SNOW PETER B [US] ET AL) 31 March 1998 (1998-03-31) * column 4, line 49 - line 53; figure 1 * | 6,7 | |
| A | * column 5, line 7 - line 16 * | 15 | TECHNICAL FIELDS SEARCHED (IPC)<br><br>H02H G01R |
| A | EISSA M M: "Evaluation of a New Current Directional Protection Technique Using Field Data" IEEE TRANSACTIONS ON POWER DELIVERY, IEEE SERVICE CENTER, NEW YORK, NY, US, vol. 20, no. 2, 1 April 2005 (2005-04-01), pages 566-572, XP011129251 ISSN: 0885-8977 * the whole document * | 1,13,15 | |
| A | US 2008/211511 A1 (CHOI MYEON SONG [KR] ET AL) 4 September 2008 (2008-09-04) * paragraphs [0032] - [0034]; figures 1,2 * | 1,3,15 | |

-/--

The present search report has been drawn up for all claims

| Place of search | Date of completion of the search | Examiner |
|---|---|---|
| The Hague | 19 November 2009 | Hillmayr, Heinrich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

**EUROPEAN SEARCH REPORT**

Application Number

EP 09 16 6352

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 584 417 B1 (HU YI [US] ET AL) 24 June 2003 (2003-06-24) * column 3, line 7 - line 26 * ----- | 1,13,15 | |

TECHNICAL FIELDS
SEARCHED      (IPC)

The present search report has been drawn up for all claims

| Place of search | Date of completion of the search | Examiner |
|---|---|---|
| The Hague | 19 November 2009 | Hillmayr, Heinrich |

**ANNEX TO THE EUROPEAN SEARCH REPORT
ON EUROPEAN PATENT APPLICATION NO.**                    EP 09 16 6352

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2009

| Patent document cited in search report | | Publication date | Patent family member(s) | | Publication date |
|---|---|---|---|---|---|
| EP 2012133 | A | 07-01-2009 | CA | 2636677 A1 | 03-01-2009 |
| | | | US | 2009009180 A1 | 08-01-2009 |
| US 5734575 | A | 31-03-1998 | US | 5537327 A | 16-07-1996 |
| US 2008211511 | A1 | 04-09-2008 | KR | 20080070397 A | 30-07-2008 |
| US 6584417 | B1 | 24-06-2003 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A.G. Phadke ; J.S. Thorp.** Synchronized Phasor Measurements and Their Applications. Springer, 2008

- **A. Ukil.** Intelligent Systems and Signal Processing in Power Engineering. Springer, 2007
- **B. Kosko.** Fuzzy Engineering. Prentice-Hall Inc, 1996